Europäisches Patentamt

European Patent Office

Office européen des brevets

(19)

(11) Publication number: **0 064 848**
**A1**

(12) # EUROPEAN PATENT APPLICATION

(21) Application number: **82302249.6**

(22) Date of filing: **30.04.82**

(51) Int. Cl.³: **B 62 D 53/08**

(30) Priority: **01.05.81 GB 8113548**

(43) Date of publication of application:
**17.11.82 Bulletin 82/46**

(84) Designated Contracting States:
**AT BE CH DE FR GB IT LI LU NL SE**

(71) Applicant: **CRAVEN TASKER (ANDOVER) LIMITED**
**Anna Valley**
**Andover Hampshire SP11 7NF(GB)**

(72) Inventor: **Anderson, Geoffrey Brian**
**Filkins Riverview Close**
**Chilbolton Stockbridge Hampshire(GB)**

(72) Inventor: **Harris, Bryan Sidney**
**Nutwood School Lane**
**St. Marybourne Andover Hampshire(GB)**

(74) Representative: **Bradbrook, Geoffrey William et al,**
**Raworth, Moss & Cook 36 Sydenham road**
**Croydon Surrey CR0 2EF(GB)**

(54) Device for coupling a trailer to a tractor vehicle.

(57) A gooseneck trailer is connected to a tractor vehicle (12) by a fifth-wheel coupling (16) of which the king pin and rubbing plate are mounted on an assembly (13) which is removably attachable to the gooseneck (11) so that the rubbing plate and king pin may remain on the tractor vehicle when the gooseneck is detached therefrom. The gooseneck may be attached to the assembly by means of a pin carried by the assembly releasably locked to the gooseneck.

FIG.4

EP 0 064 848 A1

DESCRIPTION

"DEVICE FOR COUPLING A TRAILER TO A TRACTOR VEHICLE"

This invention relates to a fifth wheel coupling device for coupling together a gooseneck trailer and a tractor vehicle.

Gooseneck trailers are commonly used for transporting heavy goods by road and comprise a load-carrying platform mounted on wheels and connected to a tractor for towing by means of a gooseneck. In some trailers the gooseneck may be folded downwardly to touch the ground when the trailer is uncoupled from the tractor to form an extension of the platform to facilitate loading of the trailer. The gooseneck is commonly connected to the tractor by means of a device known as a "fifth wheel coupling" in which the neck carries a king pin and rubbing plate engaging components mounted on the tractor.

In known arrangements of this type the king pin and rubbing plate remain attached to the gooseneck when the trailer is removed from the tractor vehicle and when the gooseneck is foldable these components will come into contact with the ground. Provision is normally made for protecting the rubbing plate and king pin in this position but even so the rubbing plate and king pin are easily damaged and can accumulate dirt which in turn may damage the fifth wheel coupling when the trailer is connected to a tractor. Furthermore the folding king pin can be difficult to fold and unfold and the uncoupling operation is generally unpleasant for the operator.

The present invention is intended to avoid or reduce these disadvantages.

The invention provides a fifth wheel coupling device for coupling together a gooseneck trailer and a tractor vehicle in which the rubbing plate and king pin of the fifth wheel coupling are mounted on an assembly to which the gooseneck is removably attachable so that the rubbing plate and king pin can remain on the tractor when the gooseneck is detached therefrom.

The rubbing plate and king pin may form part of a fifth wheel coupling of a conventional type. However as they are mounted on an assembly which is detachable from the goosenecks, when the gooseneck and tractor are separated they may remain on the tractor so that there is no risk of damage to the fifth wheel coupling either by separation of the king pin and rubbing plate from the rest of the coupling or by contact of the king pin and rubbing plate with the ground.

Advantageously, the gooseneck may be attached to and detached from the assembly carrying the king pin and rubbing plate on simple horizontal movement of the gooseneck relative to the tractor; thus once the gooseneck is supported so that it may be removed from the tractor (with the platform of the trailer lowered to the ground, or with the forward end of the platform supported by means independent of the tractor) it may be detached by driving the tractor away in the forward direction without need to raise or otherwise move the gooseneck to allow detaching.

In one arrangement the assembly attached to the king pin and rubbing plate comprises an upstanding pin and the gooseneck is provided with locking means for receiving and locking the pin, which attaches the trailer to the tractor. The locking means may comprise a generally U-shaped plate to receive the pin between the prongs of the U, a rotatable generally U-shaped crank to receive the pin and confine it between the prongs of the U-shaped plate, and a bolt member arranged to lock the crank in its pin-confining position. The crank may be urged by a spring towards an open position in which the pin may enter and leave the U-shaped plate and the crank may be moved by the pin to its pin-confining position when the pin enters between the prongs of the U-shaped plate. This feature allows a measure of automatic operation as the crank closes around the pin as the tractor and gooseneck move relatively into their coupling position and the coupling operation is completed by moving the bolt member to lock the crank. The bolt member may be urged towards its locking position by a spring and be manually movable against the spring to its unlocking position.

The assembly carrying the rubbing plate and king pin may be provided with an upstanding abutment member to abut the forward extremity of the gooseneck when the gooseneck is attached to the tractor. The combination of this abutment and a locked pin holds the gooseneck in the desired position relative to the assembly.

Coupling devices according to embodiments of the invention will now be described by way of non-limiting example with reference to the accompanying drawings in which:

Figure 1 shows the front end of a folding neck trailer with its neck in its raised position,

Figure 2 shows the trailer of Figure 1 with its neck in its lowered position,

Figure 3 shows the front end of a folding neck trailer having a coupling device of different type mounted on a tractor,

Figure 4 shows the trailer end and tractor of Figure 3 with the trailer removed from the tractor and resting on the ground,

Figure 5 is a detailed elevation of the trailer neck end and part of the tractor as shown in Figure 3,

Figure 6 is an underside view of the trailer neck end of Figure 5, and

Figure 7 is a view similar to Figure 6 with parts in different attitudes and some parts omitted.

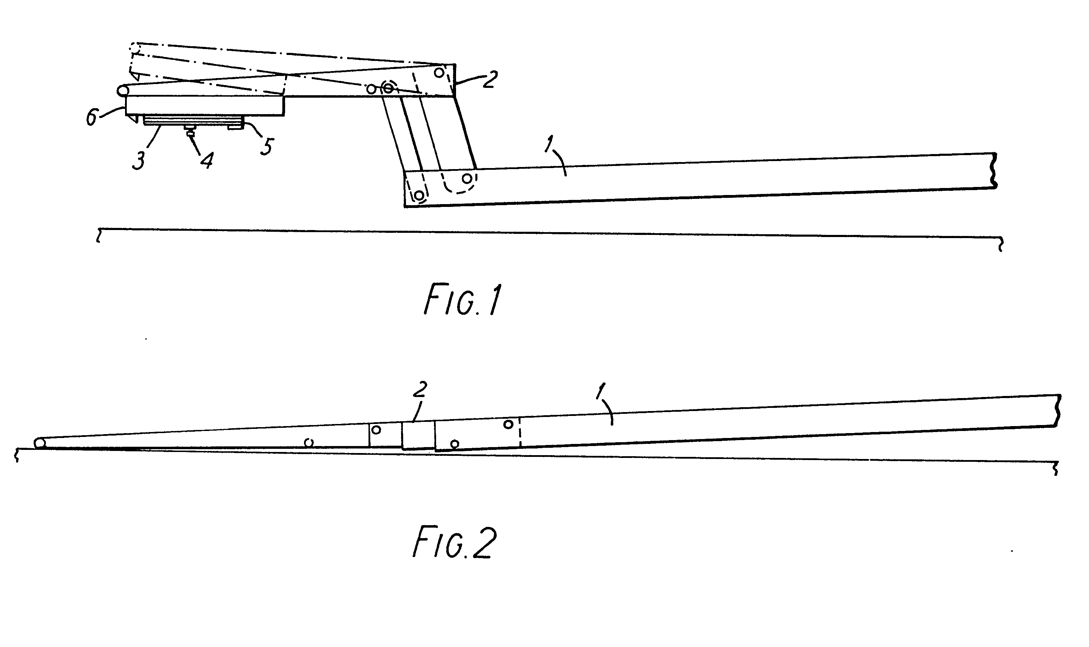

Referring to Figure 1, a transporter platform 1 is provided with a folding neck 2 of known type. The neck is movable from the position shown in Figure 1 in which the neck may be supported on a tractor for towing the platform to the position shown in Figure 2, in which the neck is resting on the ground.

When mounted on a tractor the neck carries a rubbing plate 3 and king pin 4 which, in known manner, form part of a fifth-wheel coupling with the tractor. However the rubbing plate and king pin are mounted on a sub-frame 5 which may be separated from the trailer and remain on the tractor when the trailer is separated therefrom. The sub-frame is secured to the neck by means of a snap connection and hook-over bar assembly indicated generally at 6. When the neck is in its position shown in continuous lines in Figure 1 the sub-frame is secured to the neck by assembly 6. When the neck is raised to the position shown in broken lines in Figure 1 assembly 6 releases the sub-frame which, together with the rubbing plate and king pin, remains on the tractor. The tractor may then be driven away and the neck may be lowered to the position shown in Figure 2.

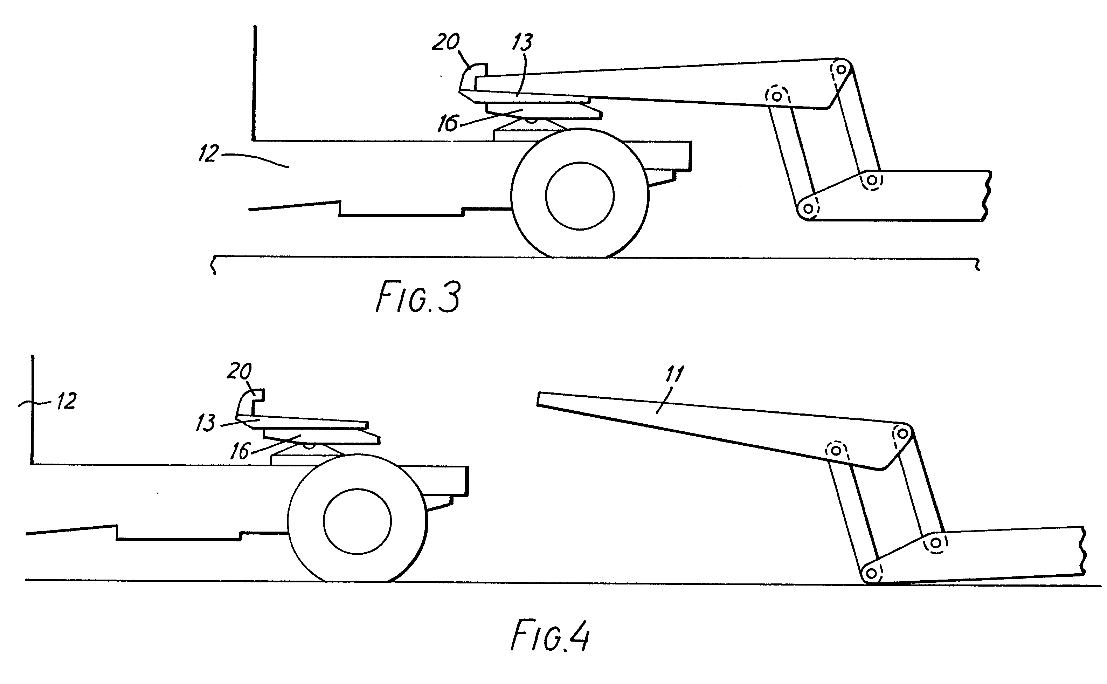

In the arrangement shown in Figure 3, the neck end 11 of a trailer when mounted on a tractor 12 is supported on the tractor by a sub-frame assembly 13 and when the trailer is removed from the tractor, as shown in Figure 4 the neck end 11 is detached from the sub-frame assembly which remains on the tractor.

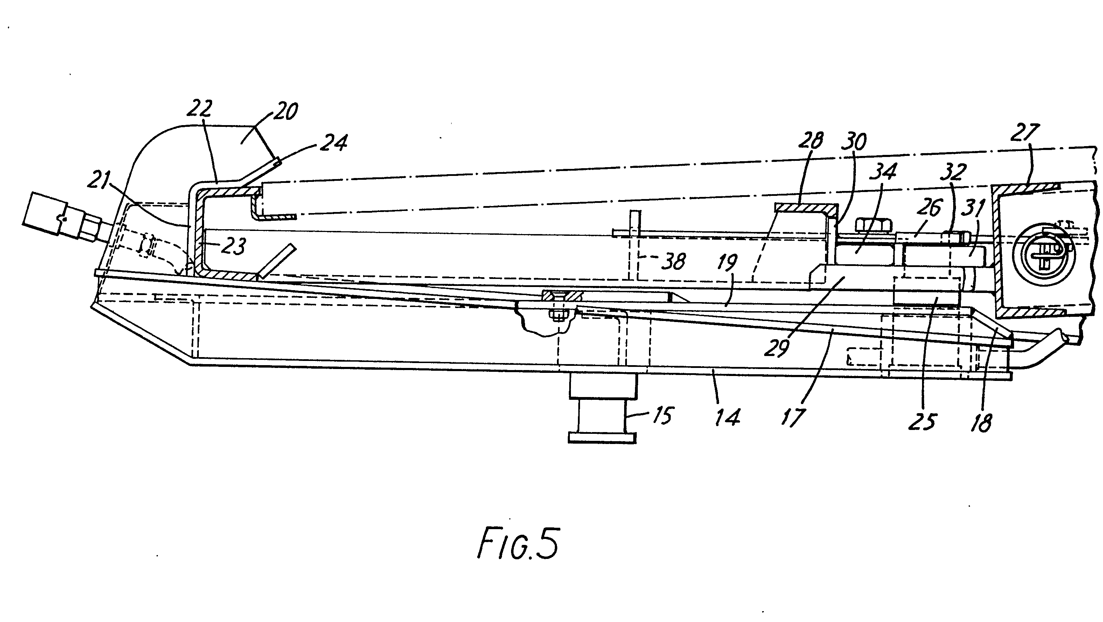

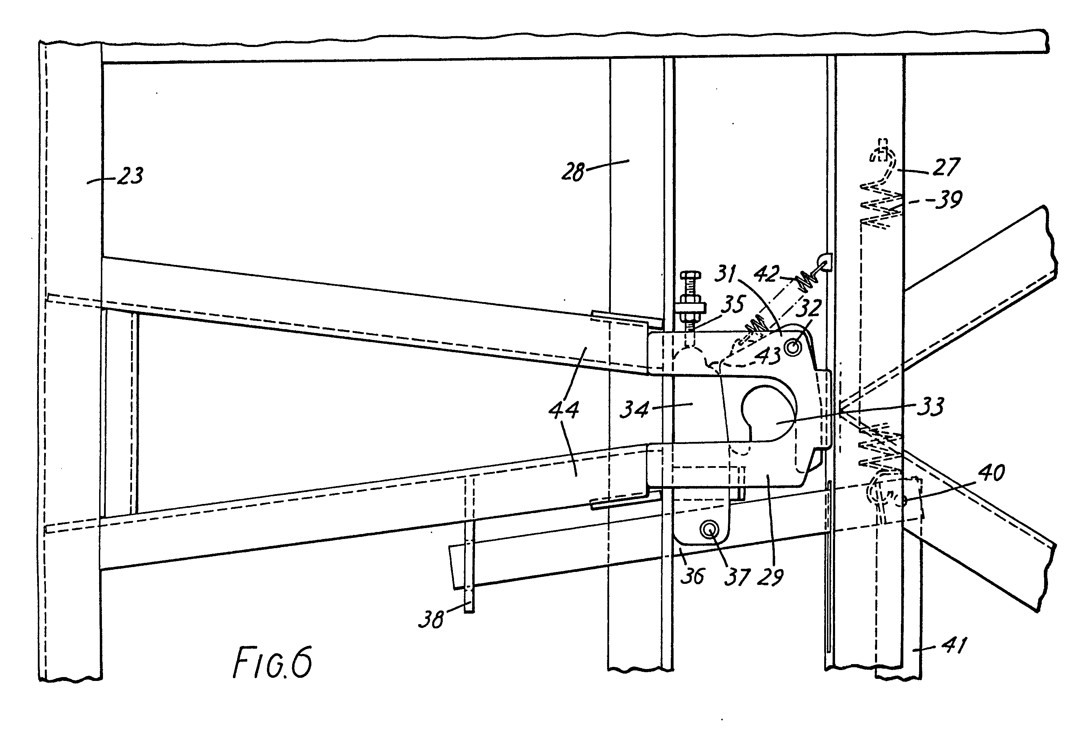

The neck end and sub-frame, when connected as shown in Figure 3, are shown in more detail in Figures 5 and 6. The sub-frame carries a fifth-wheel plate 14 and king pin 15 which form part of a fifth-wheel connection of known type indicated generally by 16 in Figures 3 and 4. The sub-frame itself is built up of members 17, 18 and 19 which are welded together to form a frame structure on which the plate 14 and pin 15 are rigidly mounted. The front end of the sub-frame is provided with an upstanding stop member 20 having interior abutment surfaces 21, 22 to receive the front extremity 23 of the neck. Surface 22 is extended by an angled portion 24 to guide the front extremity of the neck into abutment with surface 21.

The rearward end of the sub-frame supports an upstanding pin 25 having an upper flange 26 to lock the neck to the sub-frame by means of a locking device operating as follows. The neck is provided with cross-members 27, 28 to which is welded a generally U-shaped plate 29. The prongs of the U face forwardly with respect to the trailer and neck and member 28 is provided with an aperture 30 aligned with plate 29 so that the pin 25 may be inserted between the prongs of plate 29 in horizontal movement through aperture 30.

Pin 25 may be locked inside plate 29 by locking crank 31 which pivots in a horizontal plane about pivot 32 attached to plate 29. In Figure 6 crank 31 is shown in its locking position but with pin 25 omitted. Crank 31 comprises a pair of prongs defining a part-circular aperture 33 dimensioned to surround pin 25 and in the position shown in Figure 6 crank 31 and plate 29 together surround the pin 25 and lock it in place, thus securing the neck to the sub-frame.

Crank 31 is itself held in its locking position by bolt member 34 which abuts on one side against member 28 and on its other side against crank 31, preventing rotation of the crank. The locking position of bolt member 34, shown in Figure 6, is defined by adjustable stop member 35 and crank 31 and member 34 are shaped such that in this position they have respective flat surfaces which are in abutment. Bolt member 34 is retained in this position by lever 36 pivoted at 37 to the bolt member. Lever 37 may rotate about a bearing at one end provided by apertured plate 38 attached to the neck and is attached at its other end to a tension spring 39 itself attached to member 27 so that the spring urges the bolt member 34 against stop member 35.

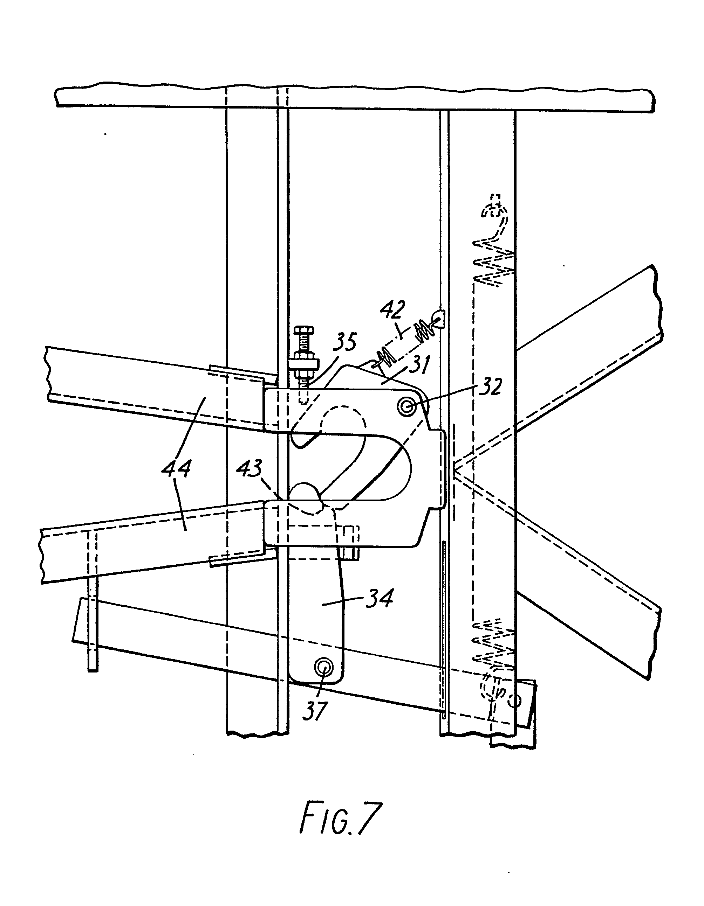

Said other end of the lever is pivoted at 40 to an operating handle 41 projecting horizontally from the neck and on pulling handle 41 outwardly against spring 39 the bolt member 34 is withdrawn, allowing crank 31 to rotate. The crank is attached to tension spring 42 attached to member 27 and when the bolt member is withdrawn to the position shown in Figure 7 the crank rotates until one of its prongs abuts the stop member 35 and the other prong abuts the shoulder 43 of the bolt member as shown, thus holding the crank in a position to allow entry and exit of the pin 25.

The neck is also provided with guide runners 44 to guide pin 25 when the neck is being attached to the trailer.

In order to attach the trailer to the tractor starting from the position shown in Figure 4 it is merely necessary to reverse the tractor to the position of Figure 3 with the bolt member 43 and plate 31 in the position of Figure 7. The extremity of the neck 23 is guided by surface 24 to abut surface 20 and the pin 25, guided by runners 44, passes between the prongs of plate 29 and abuts crank 31. On contact of pin 25 with the longer prong of plate 31, continued rearward movement of pin 25 urges plate 31 to the position shown in Figure 6. Bolt member 34 may then be released by operation of handle 41 to take its position of Figure 6, locking pin 25 to the neck. The reverse procedure is followed when releasing the neck from the tractor.

It will be appreciated that, if desired, the tractor and trailer could be uncoupled by disconnecting the king pin and rubbing plate from the remainder of the fifth wheel coupling and removing the gooseneck from the tractor by lifting; in this case the sub-frame will remain attached to the gooseneck without the disadvantages mentioned above.

As stated, the fifth wheel coupling itself may be of known type and it is possible to provide the gooseneck described above with the removable assembly, rubbing plate and king pin for use with existing tractors already provided with the remainder of the fifth wheel coupling.

CLAIMS:

1. A fifth wheel coupling device for coupling together a gooseneck trailer and a tractor vehicle, in which the rubbing plate and king pin of a fifth wheel coupling are mounted on an assembly to which the gooseneck is removably attachable so that the rubbing plate and king pin can remain on the tractor vehicle when the gooseneck is detached therefrom.

2. A device according to claim 1, in which the gooseneck may be attached to and detached from the assembly on simple horizontal movement of the gooseneck relative to the tractor.

3. A device according to claim 1 or 2, in which said assembly comprises an upstanding pin and the gooseneck is provided with locking means for receiving and locking the pin.

4. A device according to claim 3, in which the locking means comprises a generally U-shaped plate to receive the pin between the prongs thereof, a rotatable generally U-shaped crank to receive the pin and confine it between the prongs of the U-shaped plate, and a bolt member arranged to lock the crank in its pin-confining position.

5. A device according to claim 4, in which the crank is urged by a spring towards an open position in which the pin may enter and leave the U-shaped plate and is moved by the pin to its pin-confining position when the pin enters between the prongs of the U-shaped plate.

6. A device according to claim 4 or 5, in which the bolt member is urged towards its locking position by a spring and is manually movable against the spring to its unlocking position.

7.  A device according to any one of claims 3 to 6, in which the gooseneck is provided with guide runners to guide the pin towards the locking means as the tractor and gooseneck are coupled together.

8.  A device according to any preceding claim, in which said assembly is provided with an upstanding abutment member to abut the forward extremity of the gooseneck when the gooseneck is attached to the tractor.

9.  A gooseneck trailer, provided with a fifth wheel coupling device according to any preceding claim.

10.  A trailer according to claim 9, in which the gooseneck is movable between a raised position in which it may be connected to a tractor and a lowered position in which it forms an extension of a load-bearing platform of the trailer.

FIG.1

FIG.2

FIG. 3

FIG. 4

FIG.5

FIG.6

FIG.7

European Patent Office

**EUROPEAN SEARCH REPORT**

## DOCUMENTS CONSIDERED TO BE RELEVANT

| Category | Citation of document with indication, where appropriate, of relevant passages | Relevant to claim |
|---|---|---|
| X,Y | US - A - 2 656 195 (W.E. MARTIN) <br> * complete document * <br> -- | 1-7,9, 10 |
| Y | Patent Abstracts of Japan <br> Vol. 4, No. 176, 5 December 1980 <br> page 18M45 <br> & JP - A - 55 - 123572 <br> -- | 4-6 |
| Y | US - A - 3 600 006 (J. GREENWOOD SLAVEN) <br> * column 2, line 3 to column 3, line 22; <br> fig. 1 to 4 * <br> -- | 4-6 |
| Y | GB - A - 809 020 (JOST-WERKE J. STEIN- GASS GMBH) <br> * page 2, line 20 to page 3, line 21; <br> fig. 1 to 4 * <br> -- | 4-6 |
| X | GB - A - 1 249 134 (COUNTY COMMERCIAL CARS LTD.) <br> * page 2, lines 5 to 39; fig. 2, 3 * <br> ---- | 1 |

**CLASSIFICATION OF THE APPLICATION (Int. Cl. 3)**

B 62 D 53/08

**TECHNICAL FIELDS SEARCHED (Int.Cl. 3)**

B 62 D 53/00

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

The present search report has been drawn up for all claims

| Place of search | Date of completion of the search | Examiner |
|---|---|---|
| Berlin | 07-07-1982 | PETTI |

EPO Form 1503.1 06.78